(19) Europäisches Patentamt
European Patent Office
Office européen des brevets

(11) **EP 2 990 115 A1**

(12) **EUROPEAN PATENT APPLICATION**

(43) Date of publication:
02.03.2016 Bulletin 2016/09

(51) Int Cl.:
*B01J 35/00* (2006.01)　　　*B01J 35/04* (2006.01)
*B01J 21/06* (2006.01)　　　*F01N 3/20* (2006.01)
*B01J 37/02* (2006.01)　　　*B01D 53/94* (2006.01)

(21) Application number: 15002433.9

(22) Date of filing: 14.08.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: 25.08.2014 JP 2014170232

(71) Applicant: **N.E. Chemcat Corporation Tokyo 105-6124 (JP)**

(72) Inventors:
• Ito, Tomoaki
**Numazu-shi, Shizuoka, 4100314 (JP)**
• Nagata, Makoto
**Numazu-shi, Shizuoka, 4100314 (JP)**

(74) Representative: **Müller-Boré & Partner Patentanwälte PartG mbB Friedenheimer Brücke 21 80639 München (DE)**

(54) **UREA HYDROLYSIS CATALYST, SELECTIVE REDUCTION CATALYST CONTAINING UREA HYDROLYSIS MATERIAL, AND EXHAUST GAS CLEANING APPARATUS**

(57)　An object of the present invention is to provide a urea hydrolysis catalyst and a selective reduction catalyst containing a urea hydrolysis material which have an excellent hydrolysis ability of urea-water solution to $NH_3$ and can exhibit the ability at low temperatures upon removal of nitrogen oxide (NOx) from exhaust gas emitted from lean-burn engines such as boilers, gas turbines, lean-burn gasoline engines and diesel engines.

Provided is a urea hydrolysis catalyst including a monolithic carrier coated with a urea hydrolysis material as one or more catalytic layers, wherein the urea hydrolysis material includes a titania-containing inorganic oxide having an activation energy of urea hydrolysis reaction of 120 kJ/mol or less.

EP 2 990 115 A1

**Description**

The present invention relates to a urea hydrolysis catalyst, a selective reduction catalyst containing a urea hydrolysis material and an exhaust gas cleaning apparatus. More specifically, the present invention relates to a urea hydrolysis catalyst and a selective reduction catalyst containing a urea hydrolysis material which have an excellent hydrolysis ability of urea-water solution to $NH_3$ and can exhibit the ability at low temperatures upon removal of NOx from exhaust gas emitted from diesel engines by spraying urea-water solution.

Exhaust gas emitted from lean-burn engines contain various hazardous substances derived from fuel and combustion air. Such hazardous substances include hydrocarbons (HCs), soluble organic fraction (also referred to as SOF), soot, carbon monoxide (CO), nitrogen oxides (NOx) and the like. The amount of emission of these hazardous substances is controlled increasingly tightly for years. A method is put to practical use for removing the hazardous substances from exhaust gas by bringing exhaust gas into contact with a catalyst.

It has also been sought to reduce the amount of produced hazardous substances in lean-burn engines by controlling the type of fuels and the rate and timing of feeding of the fuels, the amount of air and the like. However, conventional catalysts and control methods failed to sufficiently clean exhaust gas. Particularly lean-burn engines tend to emit nitrogen oxides, which have been increasingly tightly controlled. However, in the case of diesel engines mounted on automobiles, it has been difficult to suppress emission of hazardous substances by conventional NOx removal technologies because operating conditions of the diesel engines are always changing.

Among NOx removal technologies (denitration technologies), a method utilizing a catalyst is known as a selective reduction or selective catalytic reduction (hereinafter also referred to as SCR) method , in which NOx-containing exhaust gas is brought into contact with a selective reduction catalyst mainly containing vanadium oxide, zeolite and the like in the presence of an ammonia ($NH_3$) component for reduction and denitration.

In SCR utilizing an $NH_3$ component as a reductant, NOx is eventually reduced to $N_2$ mainly according to the following reaction formulae (1) to (3) :

$$4NO + 4NH_3 + O_2 \rightarrow 4N_2 + 6H_2O \qquad (1)$$

$$6NO_2 + 8NH_3 \rightarrow 7N_2 + 12H_2O \qquad (2)$$

$$NO + NO_2 + 2NH_3 \rightarrow 2N_2 + 3H_2O \qquad (3).$$

Theoretically, denitration of exhaust gas sufficiently proceeds when the molar ratio of $NH_3$/NOx is 1.0 in the denitration reactions (1) to (3). However, when a diesel engine is operated under transient operation conditions or operated at an inappropriate space velocity, inappropriate temperature of exhaust gas or inappropriate temperature of the catalyst surface, it may be required to increase the $NH_3$/NOx ratio of the $NH_3$ component supplied in order to obtain a sufficient denitration performance. It has been pointed out that, as a result, unreacted $NH_3$ may leak out and cause secondary environmental disruption such as another environmental pollution. Hereinafter leaked $NH_3$ may be referred to as slip or $NH_3$ slip.

In such a catalytic denitration system, $NH_3$ gas may be used as a reducing component. However, $NH_3$ *per se* has irritating odour and is hazardous. Therefore, it has been proposed to supply urea-water solution, as an $NH_3$ component, at upstream of a denitration catalyst to generate $NH_3$ by thermal decomposition or hydrolysis, in which $NH_3$ is used as a reductant to effect denitration.

The reaction formulae for obtaining $NH_3$ by such decomposition of urea is represented by the following (4) to (6):

$$NH_2\text{-}CO\text{-}NH_2 \rightarrow NH_3 + HNCO \qquad (4; \text{ urea thermal decomposition})$$

$$HNCO + H_2O \rightarrow NH_3 + CO_2 \qquad (5; \text{ isocyanic acid hydrolysis})$$

$$NH_2\text{-}CO\text{-}NH_2 + H_2O \rightarrow 2NH_3 + CO_2 \qquad (6; \text{ urea hydrolysis}) .$$

Urea is supplied at upstream of a SCR catalyst by spraying urea-water solution. As described above, $NH_3$ mainly contributes to reduction and removal of NOx, and thus the decomposition efficiency of urea affects reactions of NOx by the SCR catalyst. A low decomposition efficiency of urea not only decreases efficiency of NOx removal but also increases the amount of urea used and may induce $NH_3$ slip due to unreacted urea.

In order to address the problem of $NH_3$ slip, it has been necessary to provide an oxidation catalyst at a subsequent stage of the SCR catalyst to oxidise and remove $NH_3$ slip. However, providing such a catalyst for removing $NH_3$ slip may increase costs and particularly in automobiles, it has been difficult to secure the space for mounting the catalyst.

When the amount of $NH_3$ slip is increased, the catalyst is required to have high oxidation ability, requiring use of a high amount of an expensive noble metal such as platinum, which is an active species.

During removal of NOx by an $NH_3$ component, the reaction proceeds , as shown in the formula (3) above, in an atmosphere containing approximately the same proportion of NO and $NO_2$ (Japanese Patent Application Laid-open No. H08-103636). However, NOx components emitted from lean-burn engines are mainly nitric oxide (NO) (Japanese Patent Application Laid-open No. H05-38420). Therefore, it has been proposed to provide an NO oxidation means in an exhaust gas flow path in order to increase the concentration of $NO_2$ component in exhaust gas for effectively removing NOx (Japanese Patent Application Laid-open No. H08-103636).

It has also been proposed to utilize such an NO oxidation means to simultaneously remove hazardous particle matters and NOx with one catalytic system. One of such methods consists in providing, in an exhaust gas flow path, an oxidation catalyst, a filter and a SCR catalyst in this order and spraying an ammonia component at a previous stage of the SCR catalyst (Japanese Translation of PCT Application No. 2002-502927).

As a cleaning method for simultaneously performing such NOx removal and combustion/removal of particle matters, FLENDS by Nissan Diesel K.K., which is for diesel automobiles, and BlueTEC by Daimler AG have been developed and widely used. A normalised urea-water solution having a concentration of 31.8 to 33.3% by weight has been distributed as the reducing component under the product name of Adblue.

While various catalysts are required for various functions, an engine *per se* is also required to have an improved fuel consumption in view of reduction in environmental load and reduction in fuel cost. This leads to a further decrease in the temperature of exhaust gas emitted from engines, and thus the catalysts used are also required to have an improved ignition performance at low temperatures and improved performances.

Meanwhile there is a concern for an increase in cost for searching for catalysts having improved performances. Particularly, catalysts used for high-volume diesel engines are also required to be high volume.

In fact, it has been required that catalysts for diesel engines could be evaluated for performances thereof on the basis of simple indices because such evaluation in diesel engines is several times more laborious compared to the evaluation in gasoline engines in terms of facilities, cost and time.

It has been generally believed that a base material carrying an active component such as noble metals and base metals or a base material made of inorganic oxide and the like having an activity *per se* plays a key role that contributes to the catalytic performance This is because the number of active sites and durability are significantly affected by various physical properties of the material of the base material such as surface area (e.g. BET surface area) , pore diameter, pore volume, amounts of acid points and base points, and the like. In order to search for catalysts having excellent catalytic performances, it is very important to understand which of the above various properties would contribute to favourable catalytic performances or affect the performances.

The relationship between the performance of catalytic reactions and the above various properties varies in every reaction, and thus could be only confirmed one by one by varying each property and actually carrying out the catalytic reaction.

Therefore, there has been a need for a method that allows efficient production of a urea hydrolysis catalyst and a selective reduction catalyst containing a urea hydrolysis material at low cost and allows maintenance of excellent catalytic performances over a prolonged period of time.

In view of the above problems of the prior art, an object of the present invention is to provide a urea hydrolysis catalyst and a selective reduction catalyst containing a urea hydrolysis material which have an excellent hydrolysis ability of urea-water solution to $NH_3$ and can exhibit the ability at low temperatures upon removal of NOx from exhaust gas emitted from diesel engines by spraying urea-water solution.

The inventors of the present invention have found, as a result of exhaustive investigations in order to solve the problems pertaining to urea hydrolysis catalysts or the like used in the prior art, that the quality of urea hydrolysis reaction does not directly correlate to physical properties of a material such as BET specific surface area, $NH_3$ adsorbed amount (acid amount) , pore volume and average pore diameter. The inventors have further found that by using an inorganic oxide having an activation energy of urea hydrolysis reaction of 120 kJ/mol or less as a catalyst material, an increased amount of $NH_3$ can be obtained by hydrolysis of urea-water solution and the catalyst can exhibit the function at low temperatures, eventually ensuring the catalyst to have an increased performance of denitration of exhaust gas emitted from diesel engines. Thus the inventors have completed the present invention.

The inventors also confirmed that even when a monolithic carrier cannot be properly coated with the urea hydrolysis material including the inorganic oxide, which satisfies the above requirement, due to significant detachment of the urea hydrolysis material, addition of a second inorganic oxide that reduces the detachment while satisfying the above requirement can improve denitration performance and address the problem of detachment.

Thus, the first aspect of the present invention provides a urea hydrolysis catalyst including a monolithic carrier coated with a urea hydrolysis material as one or more catalytic layers, wherein the urea hydrolysis material includes a titania-containing inorganic oxide having an activation energy of urea hydrolysis reaction of 120 kJ/mol or less.

The second aspect of the present invention provides the urea hydrolysis catalyst according to the first aspect, wherein the titania-containing inorganic oxide contains at least one selected from silica, alumina, zirconia, neodymium oxide, praseodymium oxide and barium oxide.

The third aspect of the present invention provides the urea hydrolysis catalyst according to the first or second aspect, wherein a total amount of silica, alumina, zirconia, neodymium oxide, praseodymium oxide and barium oxide accounts for 30% by weight or less of the titania-containing inorganic oxide.

The fourth aspect of the present invention provides the urea hydrolysis catalyst according to any one of the first to third aspects, wherein the urea hydrolysis material is mixed with an anti-detachment material and then applied on the monolith carrier.

The fifth aspect of the present invention provides the urea hydrolysis catalyst according to the fourth aspect, wherein the anti-detachment material includes one or more selected from a titania-containing inorganic oxide, titania sol or silica sol having an activation energy of urea hydrolysis reaction of more than 120 kJ/mol.

The sixth aspect of the present invention provides the urea hydrolysis catalyst according to any one of the first to fifth aspects, wherein the hydrolysis material accounts for 30% by weight or more of the catalytic layer.

The seventh aspect of the present invention provides the urea hydrolysis catalyst according to any one of the first to sixth aspects, wherein the coating amount of the catalytic layer is 50 to 200 g/L.

The eighth aspect of the present invention provides a selective reduction catalyst including a monolithic carrier coated with a urea hydrolysis material and a selective reduction catalyst material as one or more catalytic layers, wherein the urea hydrolysis material includes a titania-containing inorganic oxide having an activation energy of urea hydrolysis reaction of 120 kJ/mol or less.

The ninth aspect of the present invention provides the selective reduction catalyst containing the urea hydrolysis material according to the eighth aspect, wherein the titania-containing inorganic oxide contains at least one selected from silica, alumina, zirconia, neodymium oxide, praseodymium oxide and barium oxide.

The tenth aspect of the present invention provides the selective reduction catalyst containing the urea hydrolysis material according to the eighth or ninth aspect, wherein a total amount of silica, alumina, zirconia, neodymium oxide, praseodymium oxide and barium oxide accounts for 30% by weight or less of the titania-containing inorganic oxide.

The eleventh aspect of the present invention provides the selective reduction catalyst containing the urea hydrolysis material according to the eighth aspect, wherein the hydrolysis material accounts for 10 to 40% by weight of the catalytic layer.

The twelfth aspect of the present invention provides the selective reduction catalyst containing the urea hydrolysis material according to the eighth aspect, wherein the selective reduction catalyst material contains zeolite or a crystal metal aluminophosphate.

The thirteenth aspect of the present invention provides the selective reduction catalyst containing the urea hydrolysis material according to any one of the eighth to twelfth aspects, wherein the coating amount of the catalytic layer is 100 to 300 g/L.

The fourteenth aspect of the present invention provides an exhaust gas cleaning apparatus including the urea hydrolysis catalyst according to any one of the first to seventh aspects, wherein the exhaust gas cleaning apparatus further includes a urea-water solution spraying device upstream of the urea hydrolysis catalyst.

The fifteenth aspect of the present invention provides an exhaust gas cleaning apparatus including the selective reduction catalyst containing the urea hydrolysis material according to any one of the eighth to thirteenth aspects, wherein the exhaust gas cleaning apparatus further includes a urea-water solution spraying device upstream of the selective reduction catalyst.

The urea hydrolysis catalyst of the present invention has excellent hydrolysis performance of urea-water solution sprayed from a nozzle even at a low exhaust gas temperature. The selective reduction catalyst containing the urea hydrolysis material has excellent hydrolysis performance of urea-water solution sprayed from a nozzle and excellent denitration performance even at a low exhaust gas temperature upon treating NOx in exhaust gas emitted from diesel engines.

Further, according to the present invention, urea hydrolysis performance of a urea hydrolysis catalyst can be easily evaluated based on the level of activation energy required for urea hydrolysis reaction of an inorganic base material *per se.* Therefore the present invention can eliminate the need for production of a high volume of catalyst or evaluation thereof on large diesel engines, thereby allowing laboursaving facilities, reducing cost and reducing the time required for searching for new catalysts.

FIG. 1 is an illustration showing the profile of the $CO_2$ intensity by heating in the urea hydrolysis test using titania-containing composite oxide powder A as a urea hydrolysis material;

FIG. 2 is an illustration showing Kissinger plot for calculating the activation energy of urea hydrolysis reaction of titania-containing composite oxide powder A based on the data obtained from FIG. 1;

FIG. 3 is a graph showing the activation energy of urea hydrolysis reaction of urea hydrolysis materials, titania-containing composite oxide powders A to E;

FIG. 4 is a graph showing the BET specific surface area of urea hydrolysis materials, titania-containing composite oxide powders A to E;

FIG. 5 is a graph showing the NH$_3$ adsorbed amount of urea hydrolysis materials, titania-containing composite oxide powders A to E;

FIG. 6 is a graph showing the pore volume of urea hydrolysis materials, titania-containing composite oxide powders A to E;

FIG. 7 is a graph showing the average pore diameter of urea hydrolysis materials, titania-containing composite oxide powders A to E;

FIG. 8 is a graph showing the time ($_{NH3}T_{30ppm}$) required to reach the NH$_3$ production of 30 ppm using urea hydrolysis catalysts of Examples 1 to 3 and Comparative Example 1 which are produced with urea hydrolysis materials, titania-containing composite oxides A to E;

FIG. 9 is a graph showing the relation between the time ($_{NH3}T_{30ppm}$) required to reach the NH$_3$ production of 30 ppm in Examples 1 to 3 and Comparative Example 1 and the activation energy of urea hydrolysis reaction of urea hydrolysis materials, titania-containing composite oxide powders A to E;

FIG. 10 is a graph showing the relation between the time ($_{NH3}T_{30ppm}$) required to reach the NH$_3$ production of 30 ppm in Examples 1 to 3 and Comparative Example 1 and the BET specific surface area of urea hydrolysis materials, titania-containing composite oxide powders A to E;

FIG. 11 is a graph showing the relation between the time ($_{NH3}T_{30ppm}$) required to reach the NH$_3$ production of 30 ppm in Examples 1 to 3 and Comparative Example 1 and the NH$_3$ adsorbed amount of urea hydrolysis materials, titania-containing composite oxide powders A to E;

FIG. 12 is a graph showing the relation between the time ($_{NH3}T_{30ppm}$) required to reach the NH$_3$ production of 30 ppm in Examples 1 to 3 and Comparative Example 1 and the pore volume of urea hydrolysis materials, titania-containing composite oxide powders A to E;

FIG. 13 is a graph showing the relation between the time ($_{NH3}T_{30ppm}$) required to reach the NH$_3$ production of 30 ppm in Examples 1 to 3 and Comparative Example 1 and the average pore diameter of urea hydrolysis materials, titania-containing composite oxide powders A to E;

FIG. 14 is a graph showing profile of the NOx removal rate up to a certain temperature in Example 4 and Comparative Example 2 in which selective reduction catalysts were respectively used which were produced with urea hydrolysis materials, titania-containing composite oxides C and E, respectively;

FIG. 15 is an illustration showing the configuration of an exhaust gas cleaning apparatus having a urea-water solution spraying device of the present invention; and

FIG. 16 is an illustration showing another configuration of an exhaust gas cleaning apparatus having a urea-water solution spraying device of the present invention.

Hereinafter, application to diesel automobiles of a urea hydrolysis catalyst and a selective reduction catalyst containing a urea hydrolysis material of the present invention is mainly described in detail. However, the present invention is of course effective in diesel engines used for various stationary power sources such as generators.

1. Urea hydrolysis material

Previously known urea hydrolysis materials include a mixture of titanium oxide (TiO$_2$), alumina (Al$_2$O$_3$) and silica (SiO$_2$) (Japanese Patent Application Laid-open No. 2004-108185), γ-alumina (Japanese Patent Application Laid-open No. 2004-202450), a composition of one or more selected from zeolite, alumina and titania, or one or more selected from titania-vanadium type, titania-vanadium-tungsten type and titania-tungsten type (Japanese Patent Application Laid-open No. 2005-288397), a material containing tungsten oxide added to a titanium oxide carrier or containing tungsten oxide and further vanadium pentoxide added to a titanium oxide carrier (Japanese Patent Application Laid-open No. 2006-122792) and the like.

Generally, titania is known as a base material having high solid acidity and reduced adhesion of sulphur. On the other hand, alumina is well known as a base material having lower solid acidity and thus higher adhesion of sulphur than titania. Because of this, for applications concerning diesel engines emitting exhaust gas containing sulphur compounds, the base material generally used is a metal oxide having high solid acidity and reduced adhesion of sulphur typically including titania, and use of a metal oxide having low solid acidity and increased adhesion of sulphur such as alumina is less frequent.

1-1. Titania-containing inorganic oxide

In the present invention, a titania-containing inorganic oxide is used as a base material of a urea hydrolysis catalyst. Titania is one of porous inorganic oxides and is well known for high solid acidity thereof and thus almost no adhesion thereto of sulphur. Examples of the crystal structure of titania include anatase, rutile and brookite.

Titania has, when used alone, an altered and decreased BET specific surface area with an increase in an ambient temperature. Therefore it is preferable that titania is used as a titania-containing composite oxide which contains a low amount of silica, alumina, zirconia, neodymium oxide, praseodymium oxide, barium oxide and the like in order to have improved heat resistance and thus avoid the alteration in BET specific surface area.

The present applicant investigated the relation between urea hydrolysis performance and physical properties of titania-containing inorganic oxides such as BET specific surface area (according to the BET method, the same applies to hereinafter), $NH_3$ adsorbed amount (acid amount), pore volume and average pore diameter and understood the general tendency as described hereinbelow. However, the present applicant did not find clear correlation.

Thus urea hydrolysis performance is improved when the BET specific surface area or the average pore diameter is low and the $NH_3$ adsorbed amount (acid amount) or the pore volume is high.

There is a tendency that the BET specific surface area is preferably 90 $m^2$/g or less, the $NH_3$ adsorbed amount (acid amount) is preferably 0.09 mmol/g or more, the pore volume is 1 cc/g or more and the average pore diameter is 1000 nm or less. However, the urea hydrolysis performance is just a rough guide in the present invention, and the activation energy is an important index.

The urea hydrolysis material used in the present invention has an activation energy (Ea) in urea hydrolysis reaction of 120 kJ/mol or less.

The activation energy in urea hydrolysis reaction of a urea hydrolysis material itself is calculated from Kissinger plot as shown hereinbelow.

When a plurality of thermal cycles is carried out in DTA with different heating rates, the relation follows the following equation at the point where the change rates of DTA curves are equal :

[Math. 1]

$$\ln\left(\frac{\phi_1}{T_1^2}\right) + \frac{Ea}{RT_1} = \ln\left(\frac{\phi_2}{T_2^2}\right) + \frac{Ea}{RT_2} = \cdots$$

wherein $\phi$: heating rate [K/min], T: absolute temperature [K], Ea: activation energy (per mole) and R: gas constant.

By plotting $\ln(\phi/T^2)$ at the point (T) where the change rate of a DTA curve is maximum on the vertical axis and 1/T on the horizontal axis, Ea can be calculated from the resulting slope (-Ea/R). The plot at the point where the change rate is maximum is called Kissinger plot.

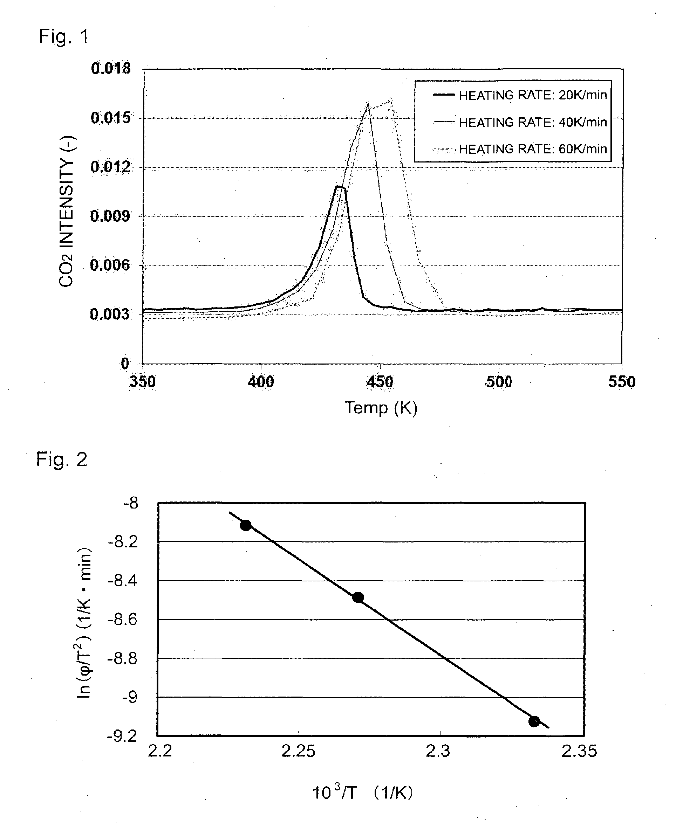

Specifically, DTA is first carried out with different heating rates ($\phi$) (20 to 60 K/min) on a TG-DTA analyser after adding urea-water solution to, for example, powder (sample) such as a titania-containing inorganic oxide (see FIG. 1). Second, by plotting (Kissinger plot) $\ln(\phi/T^2)$ and 1/T at the peak {the point (T) where the change rate is maximum} of the resulting heating curve (see FIG. 2), the activation energy (Ea) is determined from the slope thereof. The activation energy (Ea) for other samples is also determined by the similar method and the results are compared subsequently.

The urea hydrolysis material itself is required to have an activation energy of urea hydrolysis reaction of 120 kJ/mol or less. The activation energy is preferably 110 kJ/mol or less and more preferably 100 kJ/mol or less. It is not preferable that the urea hydrolysis material itself has an activation energy of urea hydrolysis reaction of higher than 120 kJ/mol because urea hydrolysis performance is significantly deteriorated as described hereinbelow.

2. Urea hydrolysis catalyst

A urea hydrolysis catalyst includes the urea hydrolysis material for the purpose of hydrolysis of urea-water solution sprayed in a piping as a reductant to $NH_3$ in order to remove nitrogen oxides from exhaust gas emitted from lean-burn engines.

The urea hydrolysis catalyst of the present invention includes a monolithic carrier coated with the urea hydrolysis material having an activation energy of urea hydrolysis reaction of 120 kJ/mol or less as one or more catalytic layers using a binder. It is preferable that the coating amount of the catalytic layer is 50 to 200 g/L. The coating amount of the catalytic layer of less than 50 g/L is not preferable because the performance may not be sufficient and the coating amount of more than 200 g/L is not preferable in terms of pressure loss.

It is desirable that the urea hydrolysis material is mixed with an anti-anti-exfoliation material and the applied on the monolith carrier. The anti-anti-exfoliation material preferably includes one or more selected from a titania-containing inorganic oxide, titania sol or silica sol having an activation energy of urea hydrolysis reaction of more than 120 kJ/mol. Excellent urea hydrolysis performance is exhibited by using the urea hydrolysis material at 30% by weight or more.

When the urea hydrolysis material is less than 30% by weight, excellent urea hydrolysis performance may not be obtained.

3. Selective reduction catalyst

The selective reduction catalyst is for selectively reducing nitrogen oxides to $N_2$ with $NH_3$ obtained from urea hydrolysis in order to remove nitrogen oxides from exhaust gas emitted from lean-burn engines. In this case, there is no premise that the urea hydrolysis reaction is carried out with a urea hydrolysis catalyst provided at the previous stage of the selective reduction catalyst. Therefore the selective reduction catalyst may be made to have urea hydrolysis function because of the type of lean-burn engines, room for accommodation, installation cost, maintenance cost and the like.

There may be two ways to make the selective reduction catalyst *per se* to have urea hydrolysis function. One consists in addition of the above urea hydrolysis material to a selective reduction catalyst and another is a selective reduction catalyst material *per se* having urea hydrolysis function. In the present invention, urea hydrolysis function is conferred by adding the urea hydrolysis material to the selective reduction catalyst.

The selective reduction catalyst of the present invention desirably includes a monolithic carrier coated with at least the urea hydrolysis material and the selective reduction catalyst material as one or more catalytic layers using a binder. The coating amount of the catalytic layer is preferably 100 to 300 g/L. The coating amount of the catalytic layer of less than 100 g/L is not preferable because the performance may not be sufficient and the coating amount of more than 300 g/L is not preferable in terms of pressure loss. It is also preferable that the hydrolysis material accounts for 10 to 40% by weight of the catalytic layer. The amount of the hydrolysis material in the catalytic layer of less than 10% by weight is not preferable because the performance may not be sufficient and the amount of more than 40% by weight is not preferable in terms of the cost.

3-1. Selective reduction catalyst material

Examples of the selective reduction catalyst material include various inorganic materials, for example, zeolite and zeolite-like compounds (crystal metal aluminophosphates) as well as transition metal oxides including vanadium oxides, titania, zirconia, tungsten oxide and the like, rare-earth oxides including ceria, lanthanum, praseodymium, samarium, gadolinium, neodymium and the like, base metal oxides such as copper oxides, iron oxides, gallium oxides, tin oxides and the like and composite oxides of the foregoing.

The examples further include alumina, silica, and mixtures and composites of alumina or silica modified with rare-earths, alkali metals or alkaline-earths and the oxide described above. The examples further include inorganic materials obtained by ion-exchange of base metals such as copper or iron with zeolite or zeolite-like compounds. It should be noted that for automobile application, it is desirable that a hazardous heavy metal such as vanadium is not contained.

In the present invention, the selective reduction catalyst preferably contains zeolite or a crystal metal aluminophosphate. In the present invention, it is preferable to avoid inclusion of a noble metal component such as Pt and Pd because the component may oxidise an ammonia component to produce NOx.

3-2. Inorganic materials

In the present invention, an inorganic material may be used together with the selective reduction catalyst material, examples of which include transition metal oxides including titania, zirconia, tungsten oxide and the like, rare-earth oxides including ceria, lanthanum, praseodymium, samarium, gadolinium, neodymium and the like, base metal oxides including gallium oxides, tin oxides and the like and composite oxides of the foregoing. Other than the above, alumina, silica, and alumina or silica modified with rare-earths, alkali metals or alkaline-earths may be used together with the selective reduction catalyst material. The above substances have excellent heat resistance and a higher specific surface area than the above oxide, and thus mixing or forming a composite with the above oxide is more preferable because the oxide *per se* can have an increased specific surface area.

Among others, ceria can promote NOx adsorption to promote SCR reaction between $NH_3$ and NOx. It is expected that zirconia exhibits an effect as a dispersion/retention material for highly dispersing other components while they are thermally stable. Further, oxides of tungsten have strong acidity and high adsorbing ability of alkaline components such as urea and ammonia, and thus is expected to exhibit an effect of an increased denitration performance. These oxides may be used alone, but it is preferable that the oxides are used as a mixture or composite.

The oxide and composite oxides thereof are not limited for the composition, structure or production method thereof. For example, starting materials containing the above elements in the form of nitrate, sulphate, carbonate, acetate, chloride and the like may be dissolved in water, the obtained aqueous solutions may be mixed, and pH may be adjusted to obtain a precipitate or the mixture is subjected to evaporation and solidification, thereby obtaining a solid, which may be calcined. When obtaining a mixture or composite, a plurality of metal salts may be simultaneously solubilized and subjected to the above procedures, or a single metal salt or a plurality of metal salts may be subjected to the above procedures to form an oxide and another metal salt(s) may be simultaneously or sequentially supported thereon. It is required to adjust the amount of use of titania as the selective reduction catalyst material because titania also has the urea hydrolysis ability.

4. Binder

In the present invention, the urea hydrolysis catalyst material and the selective reduction catalyst material may be detached from a monolithic carrier upon coating thereof with base material particles or cocatalyst particles. In order to avoid the anti-exfoliation, a binder for binding the respective particles to base material particles or cocatalyst particles may be used as an anti-anti-exfoliation material described hereinbelow.

The binder used is not particularly limited. However, it is preferable that the binder is of the same type as the base material because such a binder does not evaporate by burning and a binder fixing to the base material may adversely affect the base material.

Examples of the binder include various types of sol such as alumina sol, titania sol, silica sol and zirconia sol. The examples also include soluble salts such as aluminium nitrate, aluminium acetate, titanium nitrate, titanium acetate, zirconium nitrate and zirconium acetate. The examples further include acids such as acetic acid, nitric acid, hydrochloric acid and sulphuric acid.

5. Monolithic carrier

The urea hydrolysis catalyst and the selective reduction catalyst are preferably supported on, together with base material particles or cocatalyst particles, a monolithic carrier which is a honeycomb carrier. A honeycomb carrier is made of ceramics such as cordierite, silicon carbide and silicon nitride or metals such as stainless-steel. The structure of a honeycomb carrier includes numerous parallel fine gas flow paths extending throughout the carrier structure. In terms of durability and cost, the honeycomb carrier is preferably made of cordierite.

For the honeycomb carrier, the number of pores is also appropriately adjusted by considering the type of exhaust gas treated, the gas flow rate, the pressure loss or the removal efficiency. The cell density thereof is preferably 100 to 900 cells/inch$^2$ (15.5 to 139.5 cells/cm$^2$) and more preferably 200 to 600 cells/inch$^2$ (31 to 93 cells/cm$^2$). When the cell density is more than 900 cells/inch$^2$ (139.5 cells/cm$^2$), particulate matters (PMs) adhered may cause clogging and when the cell density is less than 100 cells /inch$^2$ (15.5 cells/cm$^2$), the geometrical surface area is decreased and thus the catalyst has a decreased effective usage rate. The cell density refers to the number of cells per unit area on the section of a honeycomb carrier orthogonal to the gas flow path.

It is widely known that a honeycomb carrier may include a flow-through structure in which air flow paths are connected and a wall-flow structure in which end surfaces of some air flow paths are closed and air can communicate through wall surfaces of air flow paths. The flow-through structure has low air resistance and low pressure loss of exhaust gas. The wall-flow structure can filter out particulate matters from exhaust gas. Either of the structures may be used for the urea hydrolysis catalyst and the selective reduction catalyst of the present invention.

6. Configuration of layers

The urea hydrolysis catalyst and the selective reduction catalyst of the present invention includes a honeycomb carrier coated with the urea hydrolysis catalyst material and the like as one or more layers. The configuration may include one layer. However, two or more layers may increase durability and/or catalytic performance.

6-1. Configuration of layers in urea hydrolysis catalyst

In the present invention, the total coating amount of a catalyst composition containing the urea hydrolysis material is preferably 50 to 200 g/L and more preferably 70 to 150 g/L in the urea hydrolysis catalyst. The amount of less than 50 g/L is not preferable because with the decrease in the amount, the number of active sites in the urea hydrolysis material is also decreased, resulting in reduction in urea hydrolysis performance. The urea hydrolysis catalyst has lower catalyst diameter than the selective reduction catalyst and thus has higher flow rate of exhaust gas and a tendency of an increased pressure loss. Therefore, the amount of more than 200 g/L is not preferable because the pressure loss in cells is increased and the load on the engine is increased.

When a titania-containing inorganic oxide is used as the urea hydrolysis material and applied on a honeycomb carrier, anti-exfoliation may result due to the difference in the coefficient of thermal expansion between the titania-containing inorganic oxide and the honeycomb structure. One measure for preventing anti-exfoliation consists in adding an appropriate anti-anti-exfoliation material when a titania-containing inorganic oxide having an activation energy of urea hydrolysis reaction of 120 kJ/mol or less is applied.

The anti-anti-exfoliation material which may be used includes a binder obtained by forming sol of titania, which is a main component of a titania-containing composite oxide, or optionally a binder obtained by forming sol of silica, alumina, zirconia, neodymium oxide, praseodymium oxide, barium oxide or the like contained in a titania-containing composite oxide. A titania-containing inorganic oxide having an activation energy of urea hydrolysis reaction of more than 120 kJ/mol can be used as an anti-anti-exfoliation material, provided that it has a sufficient anti-exfoliation prevention function.

The titania-containing inorganic oxide having an activation energy of urea hydrolysis reaction of 120 kJ/mol or less preferably accounts for 30% by weight or more, more preferably 40% by weight or more and particularly preferably 50% by weight or more of the total coating amount of the catalyst composition. The amount of less than 30% by weight is not preferably because with the decrease in the amount, the number of active sites for urea hydrolysis is decreased, resulting in reduction in urea hydrolysis performance.

Another measure for preventing anti-exfoliation is to decrease the amount of catalyst coated per coating cycle and increase the number of coating cycles. The number of coating cycles is not particularly limited and is such that the amount of anti-exfoliation is minimum. However, an immoderately increased number of coating cycles increases the cost, and thus the number of coating cycles may be set to 2 and the cost and productivity may be taken into consideration together with the selection of the anti-anti-exfoliation material. After reviewing the status of anti-exfoliation following the first coating cycle, the coating amount for the second or later coating cycle may be determined.

6-2. Configuration of layers in selective reduction catalyst containing urea hydrolysis material

In the present invention, the total coating amount of a catalyst composition in the selective reduction catalyst containing the urea hydrolysis material is preferably 100 to 300 g/L and more preferably 150 to 250 g/L. The amount of less than 100 g/L is not preferable because the dispersibility of a noble metal to be carried such as Rh is deteriorated, thus the number of active sites is decreased and the steam reforming performance is decreased. The amount of more than 300 g/L is not preferable because a decrease in the volume within cells increases pressure loss and increases the load on the engine.

In the selective reduction catalyst containing the urea hydrolysis material, unlike the urea hydrolysis catalyst, the main component of the catalytic layer is zeolite. Due to the difference in the coefficient of thermal expansion between zeolite and a honeycomb structure, anti-exfoliation tends to occur. In order to prevent anti-exfoliation of zeolite, use of a binder obtained by forming sol of silica, which is a main component of zeolite, is prerequisite.

In the selective reduction catalyst containing the urea hydrolysis material, the urea hydrolysis material preferably accounts for 10 to 40% by weight and more preferably 15 to 30% by weight of the total coating amount of the catalyst composition in order to sufficiently exhibit the urea hydrolysis function. The amount of less than 10% by weight is not preferably because with the decrease in the amount, the number of active sites for urea hydrolysis is decreased, resulting in reduction in urea hydrolysis performance. The amount of more than 40% by weight is not preferable because the amount of the selective reduction material such as zeolite is relatively decreased to decrease denitration performance and $NH_3$ produced by hydrolysis of urea-water solution is unreacted and discharged.

In the present invention, an example of the selective reduction catalyst having urea hydrolysis function is a monolithic carrier coated with zeolite containing the element iron, which is further coated with a ceria-zirconia-containing composite oxide and zeolite containing the element iron, which is further coated with the above urea hydrolysis material, the titania-containing composite oxide.

A denitration component having urea hydrolysis function per *se* such as zeolite containing the element copper may be used as a catalytic layer to coat a monolithic carrier.

7. Preparation of catalysts

In the present invention, preparation of the urea hydrolysis catalyst and the selective reduction catalyst (SCR) from a honeycomb carrier and a catalyst material may be generally carried out by following the washcoat method.

First, a catalyst material containing a urea hydrolysis material having a specific activation energy (Ea) and a honeycomb carrier are provided. The catalyst material is prepared by mixing an optional additive such as a binder and a surfactant with water or a solvent containing water and a water-soluble organic solvent to obtain a slurry mixture. Namely, the catalyst material and water or a solvent (aqueous solvent) containing water and a water-soluble organic solvent are mixed at a specific ratio to obtain a slurry mixture, and in the present invention, the amount of the aqueous solvent used may be such that the catalyst components can be uniformly dispersed in the slurry.

Next, a catalyst composition is prepared as a slurry mixture containing the catalyst material which is applied on the honeycomb carrier. After coating with the catalyst composition, drying and calcining are carried out. The drying temperature is preferably 100 to 300°C and more preferably 100 to 200°C. The calcining temperature is preferably 300 to 600°C and particularly preferably 400 to 600°C. The drying period is preferably 0.5 to 2 hours and the calcining period is preferably 1 to 3 hours. Heating may be provided by a well-known heating means such as an electric furnace and a gas furnace.

8. Exhaust gas cleaning apparatus

An exhaust gas cleaning apparatus including the urea hydrolysis catalyst or the selective reduction catalyst of the present invention includes, as exemplified by the following catalyst devices I and II, a urea-water solution spraying device upstream of the catalyst.

The urea-water solution spraying device generally includes, in order to supply urea-water solution, a storage tank of a reductant, a piping and a spray nozzle attached at the tip thereof.

The position of the urea-water solution spraying device is subsequent to an oxidation catalyst (DOC) and previous to a selective reduction catalyst (SCR) for reducing nitrogen oxide (NOx) by bringing NOx into contact with a reductant. When a DPF or CSF is provided between a DOC and a SCR, the urea-water solution spraying device is preferably arranged subsequent to the DPF or CSF.

The urea component which may be used is a normalised urea-water solution having the concentration of 31.8 to 33.3% by weight, for example, Adblue (product name).

8-1. Catalyst device I

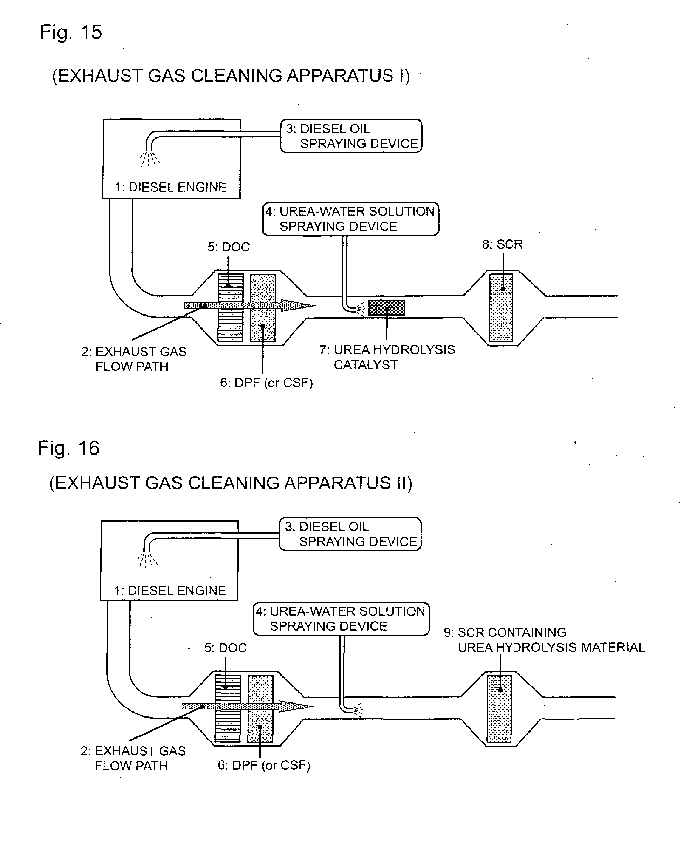

A catalyst device I including a urea hydrolysis catalyst is schematically shown in FIG. 15. Specifically, the exhaust gas cleaning apparatus includes an oxidation catalyst (DOC) containing a noble metal component for oxidising hydrocarbons (HCs), carbon monoxide (CO) and nitric oxide (NO) in exhaust gas emitted from a diesel engine; a diesel particle filter (DPF) or a catalysed soot filter (CSF) for collecting particle matters such as soot and, every time when pressure loss due to accumulated soot exceeds a certain value, spraying diesel oil in order to increase the temperature of exhaust gas and burn soot; a urea-water solution spraying device for supplying a urea-water solution; and a selective reduction catalyst (SCR) for reducing and removing nitrogen oxide (NOx) using $NH_3$ produced by hydrolysis of urea, the selective reducing catalyst being devoid of a noble metal, all of which are arranged in this order from the upstream side in an exhaust gas flow path, wherein the exhaust gas cleaning apparatus further includes a urea hydrolysis catalyst between the urea-water solution spraying device and the SCR.

Namely, as shown in FIG. 15, the exhaust gas cleaning catalyst device includes, in an exhaust gas flow path 2 extending from a diesel engine 1, an oxidation catalyst (DOC) 5, a diesel particle filter (DPF) {or a catalysed soot filter (CSF)} 6, a urea-water solution spraying device 4 subsequent thereto, a selective reduction catalyst (SCR) 8 subsequent to the spraying device 4 and a urea hydrolysis catalyst 7 between the urea-water solution spraying device 4 and the SCR 8.

In order to increase the temperature of exhaust gas in the system to promote burning and removal of soot at the DPF (or CSF) 6, a diesel oil spraying device 3 is provided upstream of the oxidation catalyst (DOC) 5. Diesel oil may be sprayed towards the inside of a cylinder of the diesel engine or towards the inside of a piping between an exhaust outlet of the diesel engine and the oxidation catalyst (DOC).

The urea hydrolysis material used for production of the catalyst of the present invention has an increased activity compared to conventional materials, and thus allows reduction in the amount of the urea hydrolysis catalyst used and reduction in size of the device.

8-2. Catalyst device II

A catalyst device II includes an oxidation catalyst (DOC) ; a diesel particle filter (DPF) or a catalysed soot filter (CSF); a urea-water solution spraying device; and a selective reduction catalyst (SCR) containing a urea hydrolysis material in this order from the upstream side in an exhaust gas flow path.

Namely, as shown in FIG. 16, the catalyst device II includes, in an exhaust gas flow path 2 extending from a diesel engine 1, an oxidation catalyst (DOC) 5, a diesel particle filter (DPF) {or a catalysed soot filter (CSF)} 6, a urea-water solution spraying device 4 subsequent thereto and a selective reduction catalyst (SCR) 9 containing a urea hydrolysis material subsequent to the spraying device 4.

The urea hydrolysis material used in the present invention, which is arranged so as to be an upper and/or lower layer relative to the selective reduction catalyst, has an increased activity compared to conventional materials, and thus allows reduction in the amount of the urea hydrolysis material used and reduction in size of the device.

Examples

The features of the present invention are further highlighted by way of the following Examples and Comparative Examples. However, it should be understood that the present invention is not limited by Examples.

Urea hydrolysis materials used for urea hydrolysis catalysts and selective reduction catalysts (SCR) in present Examples and Comparative Examples were measured for the activation energy of urea hydrolysis reaction, the BET specific surface area, the $NH_3$ adsorbed amount, the pore volume and the average pore diameter according to the following methods, respectively.

<Activation energy of urea hydrolysis reaction>

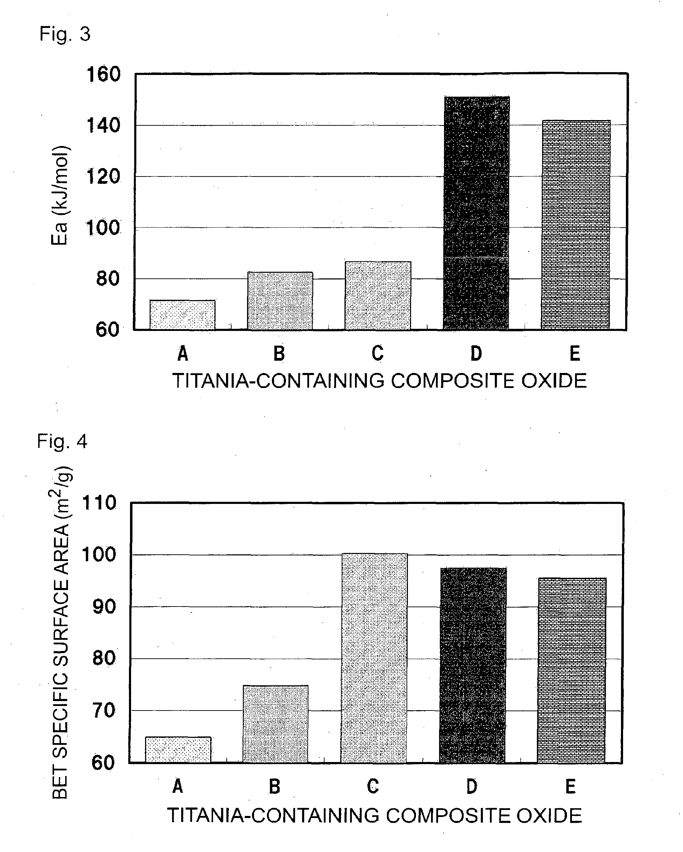

Each titania-containing composite oxide powder (10 g) was weighed and calcined in an electric furnace at 650°C for 100 hours. After cooling, powder was taken out from the electric furnace, a fraction of 10 mg was taken therefrom and 1 mg of the commercially available AdBlue was added to the thus obtained heat-treated titania-containing composite oxide powder. Thereafter, a sample tube of a TG-DTA analyser was filled with the mixture, and the measurement while heating was carried out on Thermo Mass Photo available from Rigaku Corporation at three levels of heating rate ($\phi$) of 20, 40 and 60 K/min while allowing the gas indicated in Table 1 to flow (see FIG. 1). Based on the heating curve, In ($\phi/T^2$) at the point (T) where the change rate of $CO_2$ was maximum and 1/T were plotted on the vertical and horizontal axes, respectively (Kissinger plot, see FIG. 2), and the activation energy was determined from the slope thereof (see FIG. 3).

Table 1

|  | Gas concentration (%) | Flow rate (mL/min) |
|---|---|---|
| $O_2$ | 10 | |
| Ar | 5 | 300 |
| $H_2O$ | 1 | |
| He | Balance | |

<BET specific surface area>

The BET specific surface area of each urea hydrolysis material powder was calculated by the BET method on Tristar 3000 available from Micromeritics Instrument Corporation using $N_2$ as an adsorbate molecule.

<$NH_3$ adsorbed amount>

The $NH_3$ adsorbed amount of each urea hydrolysis material powder was obtained by, on an automated thermal desorption spectrum analyser TPD-1-AT available from Japan Bel, allowing adsorption of $NH_3$ on 50 mg of the powder at 100°C for 1 hour and then heating to 600°C to calculate the desorbed amount of $NH_3$ on the equation of state (PV = nRT).

<Pore distribution (pore diameter, pore volume) measurement>

The pore diameter (mode diameter (diameter)) and the pore volume of each alumina powder were calculated on PASCAL 140 and 440 available from Thermo Fisher Scientific by the mercury intrusion technique.

<Engine evaluation test of catalyst>

A urea hydrolysis catalyst or a selective reduction catalyst containing a urea hydrolysis material was placed in a converter which was then attached at an exhaust outlet of a diesel engine. A urea-water solution spray test was carried out as follows to evaluate the catalyst on an engine.

The following urea hydrolysis catalysts of Examples 1 to 3 and Comparative Example 1 were subjected to heat treatment in an electric furnace at 650°C for 50 hours. Selective reduction catalysts respectively containing a urea hydrolysis material of Example 4 and Comparative Example 2 were subjected to heat treatment in an electric furnace at 650°C for 100 hours.

1. Urea-water solution spray test

1-1. NH$_3$ generation test

A diesel engine with a size of 5 L was set to operate at a rotation speed of 2,000 rpm, and the temperature of exhaust gas was fixed to 150°C with a thermocouple provided in front of an inlet of a urea hydrolysis catalyst. A commercially available urea-water solution was sprayed from a urea-water solution spraying device tube provided in front of the thermocouple and spraying was continued so as to obtain the molar ratio (NH$_3$/NOx ratio) between NOx emitted from the emitting engine and NH$_3$ generated from the urea-water solution of 1.4. Exhaust gas at the outlet of the catalyst was sampled through a sampling tube and the NH$_3$ concentration in the exhaust gas was measured.

1-2. Denitration performance test

A diesel engine with a size of 5 L was set to operate at a rotation speed of 2,000 rpm, and the temperature of exhaust gas was fixed to 140°C with a thermocouple provided in front of an inlet of a selective reduction catalyst containing a urea hydrolysis material. A commercially available urea-water solution was sprayed from a urea-water solution spraying device tube provided in front of the thermocouple and spraying was continued so as to obtain the NH$_3$/NOx ratio of 1.0. Exhaust gas was sampled before and after the catalyst through sampling tubes, the NOx concentration in the exhaust gas was measured and the NOx removal rate was calculated from the difference in the NOx concentration. The NO removal rate was then determined by heating at a constant rate of 5°C/min.

[Example 1]

To a ball mill, 500 g of titania-containing composite oxide powder A (TiO$_2$: 97% by weight, SiO$_2$: 3% by weight) having a urea hydrolysis activation energy (Ea) of 72 kJ/mol, a BET specific surface area of 65 m$^2$/g, an average pore diameter of 502 nm, a pore volume of 1.1 cc/g, and an NH$_3$ adsorbed amount (acid amount) of 0.108 mmol/g, and 500 g of titania-containing composite oxide powder E (TiO$_2$: 89% by weight, SiO$_2$: 7% by weight, Al$_2$O$_3$: 4% by weight) having Ea of 142 kJ/mol, a BET specific surface area of 96 m$^2$/g, an average pore diameter of 189 nm, a pore volume of 1. 7 cc/g, and an NH$_3$ adsorbed amount (acid amount) of 0.043 mmol/g and 100 g of titania sol (in terms of oxide), as anti-anti-exfoliation materials, were added. The mixture with pure water added was milled until a certain particle size was obtained to obtain slurry α.

A monolith carrier, i.e., a honeycomb flow-through type cordierite carrier {300 cells/inch$^2$ (465 k/m$^2$), 5 mil (0.125 mm) thickness, 143.8 mm diameter x 76.2 mm length, 1.238 L} was immersed in the slurry α and coated by the washcoat method so that the coating amount per unit volume was 110 g/L. The monolith carrier was then dried at 150°C for 1 hour and calcined in an air atmosphere at 500°C for 1 hour to obtain a urea hydrolysis catalyst of Example 1.

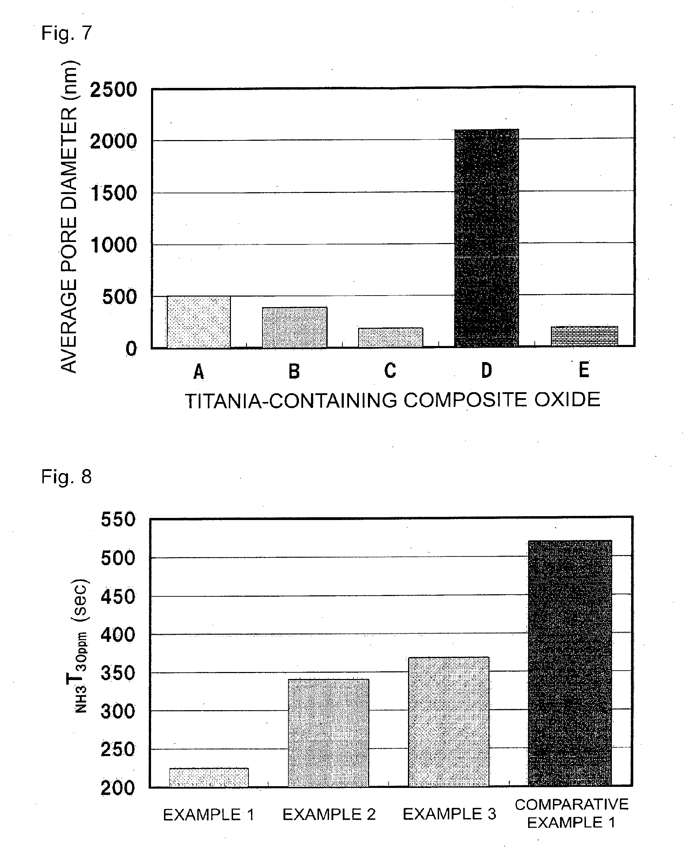

The urea hydrolysis catalyst of Example 1 including the honeycomb structure coated with titania-containing composite oxides A and E was measured for the NH$_3$ generation time ($_{NH3}T_{30ppm}$: the time required, after spraying a urea-water solution at 150°C and passing through the urea hydrolysis catalyst, to reach the NH$_3$ production of 30 ppm) and the result is shown in FIG. 8.

[Example 2]

A urea hydrolysis catalyst of Example 2 was obtained in a similar catalyst preparation method as Example 1 except that the titania-containing composite oxide powder A in Example 1 was replaced with titania-containing composite oxide powder B (TiO$_2$: 88% by weight, SiO$_2$: 3% by weight, ZrO$_2$: 9% by weight) having Ea of 83 kJ/mol, a BET specific surface area of 75 m$^2$/g, an average pore diameter of 389 nm, a pore volume of 1.57 cc/g and an NH$_3$ adsorbed amount (acid amount) of 0.123 mmol/g.

The urea hydrolysis catalyst of Example 2 including the honeycomb structure coated with titania-containing composite oxides B and E was measured for the NH$_3$ generation time ($_{NH3}T_{30ppm}$: the time required, after spraying a urea-water solution at 150°C and passing through the urea hydrolysis catalyst, to reach the NH$_3$ production of 30 ppm) and the result is shown in FIG. 8.

[Example 3]

A urea hydrolysis catalyst of Example 3 was obtained in a similar catalyst preparation method as Example 1 except that the titania-containing composite oxide powder A in Example 1 was replaced with titania-containing composite oxide powder C (TiO$_2$: 90% by weight, SiO$_2$:10% by weight) having Ea of 87 kJ/mol, a BET specific surface area of 98 m$^2$/g, an average pore diameter of 186 nm, a pore volume of 1.73 cc/g and an NH$_3$ adsorbed amount (acid amount) of 0.109 mmol/g.

The urea hydrolysis catalyst of Example 3 including the honeycomb structure coated with titania-containing composite oxides C and E was measured for the $NH_3$ generation time ($_{NH3}T_{30ppm}$: the time required, after spraying a urea-water solution at 150°C and passing through the urea hydrolysis catalyst, to reach the $NH_3$ production of 30 ppm) and the result is shown in FIG. 8.

[Comparative Example 1]

A urea hydrolysis catalyst of Comparative Example 1 was obtained in a similar catalyst preparation method as Example 1 except that the titania-containing composite oxide powder A in Example 1 was replaced with titania-containing composite oxide powder D ($TiO_2$: 85% by weight, $SiO_2$: 15% by weight) having Ea of 151 kJ/mol, a BET specific surface area of 65 $m^2/g$, an average pore diameter of 2094 nm, a pore volume of 0.75 cc/g and an $NH_3$ adsorbed amount (acid amount) of 0.108 mmol/g.

The urea hydrolysis catalyst of Comparative Example 1 including the honeycomb structure coated with titania-containing composite oxides D and E was measured for the $NH_3$ generation time ($_{NH3}T_{30ppm}$: the time required, after spraying a urea-water solution at 150°C and passing through the urea hydrolysis catalyst, to reach the $NH_3$ production of 30 ppm) and the result is shown in FIG. 8.

Evaluation 1

The urea hydrolysis catalysts of Examples 1 to 3 and Comparative Example 1 respectively contain the titania-containing composite oxide E and titania sol as anti-anti-exfoliation materials having excellent adhesiveness to honeycomb structures. However, due to insufficient urea hydrolysis performance thereof, it was only around 45% by weight of the whole catalyst which effectively functioned for urea hydrolysis reaction.

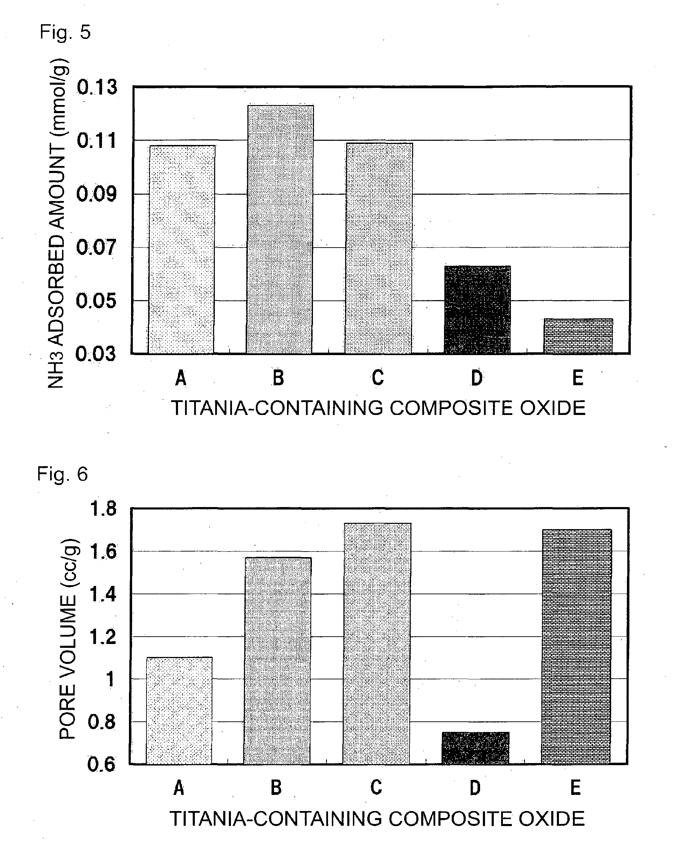

For the urea hydrolysis materials used, i.e., titania-containing composite oxides A to E, the activation energy of urea hydrolysis reaction (Ea), the BET specific surface area, the $NH_3$ adsorbed amount (acid amount), the pore volume and the average pore diameter are summarised respectively in FIGS. 3 to 7.

As apparent from FIG. 3, the titania-containing composite oxides A to C respectively had Ea of 120 kJ/mol or less and exhibited excellent urea hydrolysis performance, while the titania-containing composite oxides D and E respectively had Ea of more than 140 kJ/mol and exhibited poor urea hydrolysis performance.

The $NH_3$ generation time ($_{NH3}T_{30ppm}$: the time required, after spraying a urea-water solution at 150°C and passing through the urea hydrolysis catalyst, to reach the $NH_3$ production of 30 ppm) by the urea hydrolysis catalysts is summarised in FIG. 8. The followings are elucidated from the figure.

Thus, the urea hydrolysis catalysts of Examples 1 to 3 produced with the titania-containing composite oxides A to C having an activation energy of urea hydrolysis of 120 kJ/mol or less could generate $NH_3$ within 400 seconds even under a spraying condition of a urea-water solution at a temperature as low as 150°C, which is known as a temperature at which urea is not decomposed. On the other hand, the urea hydrolysis catalyst of Comparative Example 1 produced with the titania-containing composite oxides D and E having an activation energy of more than 140 kJ/mol generated $NH_3$ after 500 seconds.

Accordingly, by using a titania-containing composite oxide having an activation energy of urea hydrolysis of 120 kJ/mol or less as a urea hydrolysis material, a preferable correlation with the $NH_3$ generation time ($_{NH3}T_{30ppm}$) could be exhibited even when the amount of the urea hydrolysis material of the present invention added to a urea hydrolysis catalyst was 50% by weight or less.

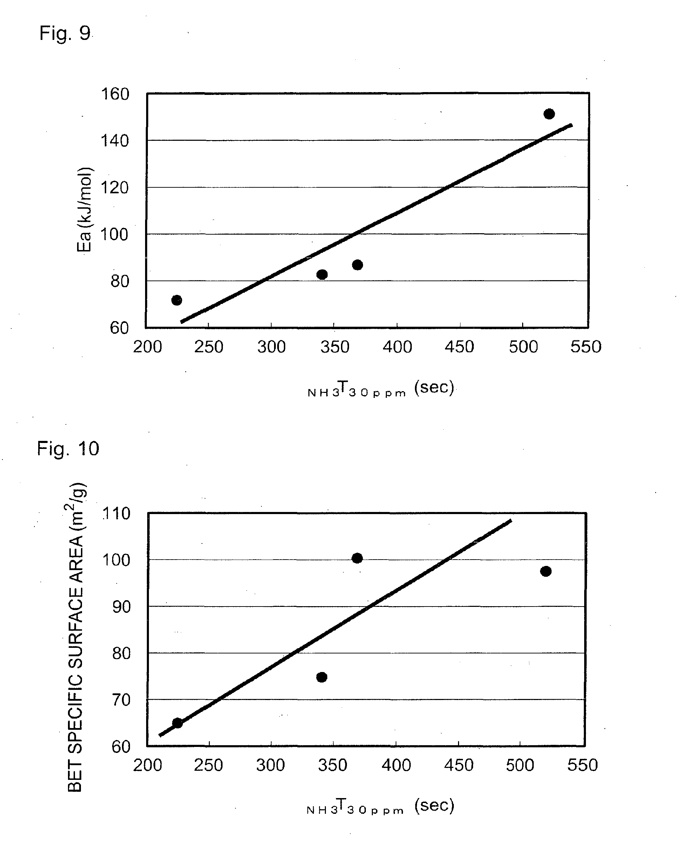

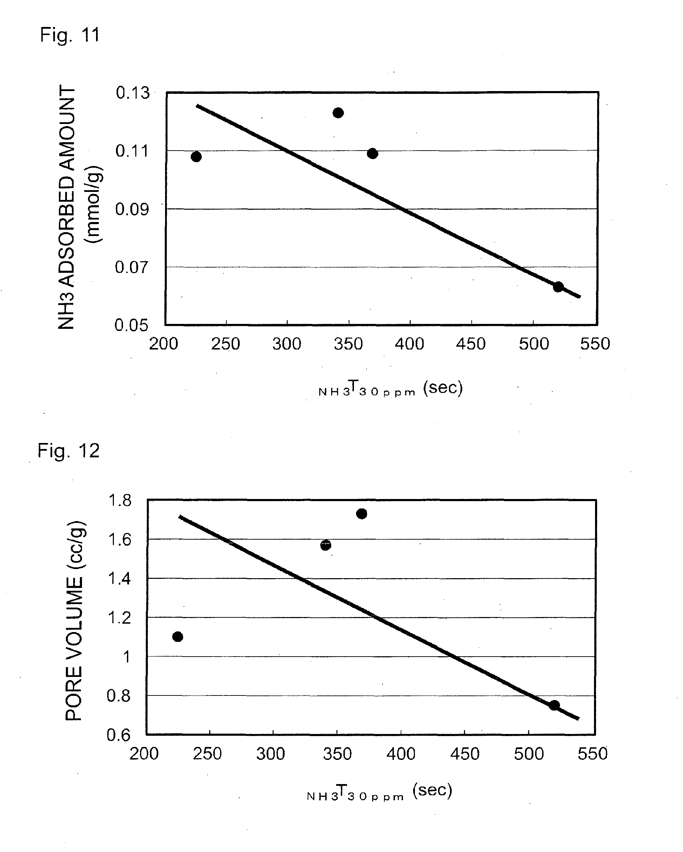

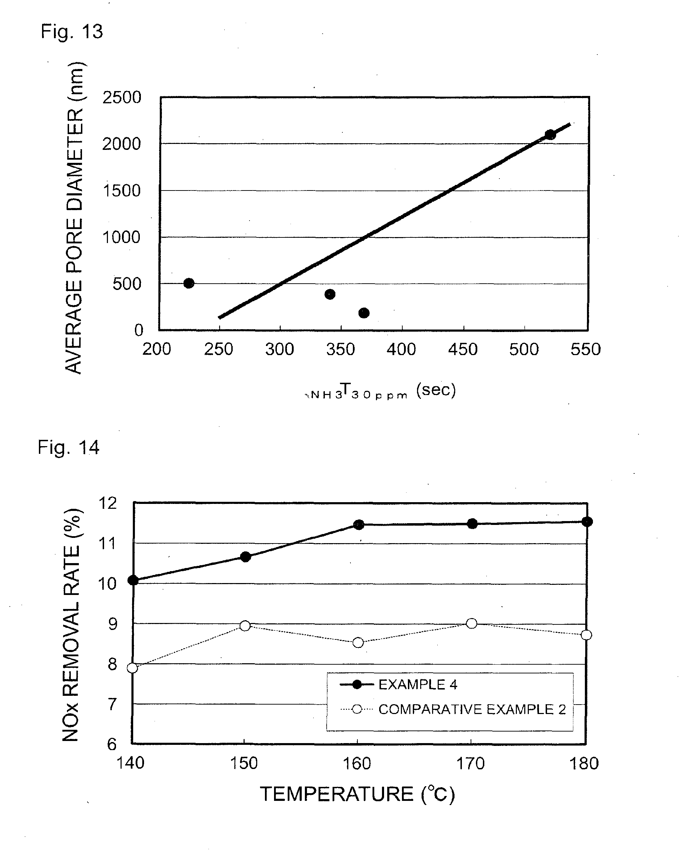

In a similar method, the correlations between the $NH_3$ generation time by hydrolysis of the urea-water solution by Examples 1 to 3 and Comparative Example 1 and various physical properties of the urea hydrolysis materials A to D used for the catalysts {Ea (see FIG. 9), BET specific surface area (see FIG. 10), $NH_3$ adsorbed amount (acid amount) (see FIG. 11), pore volume (see FIG. 12), average pore diameter (see FIG. 13) } were compared. It was then only the urea hydrolysis performance (Ea) that exhibited preferable correlation with the $NH_3$ generation time, and other general physical properties of the materials {BET specific surface area, $NH_3$ adsorbed amount (acid amount), pore volume and average pore diameter} did not show any correlation. These results suggest that the urea hydrolysis performance of a material can be an alternative characteristic of the urea hydrolysis performance of a catalyst, and clearly indicates that general physical properties of the material cannot be used as alternative characteristics.

[Example 4]

<Production of selective reduction catalyst (1)>

- Lower layer -

The following materials: 4.3 kg of β-type zeolite powder F (silica/alumina ratio = 26) in which 1% by weight of Fe was ion-exchanged, 6.2 kg of MFI-type zeolite powder G (silica/alumina ratio = 26) in which 4% by weight of Fe was ion-exchanged, and 2.0 kg of titania-containing composite oxide powder A were prepared and amorphous silica sol (0.9 kg in terms of oxide) as an anti-anti-exfoliation material was added to a ball mill, followed by addition of pure water and milling to a certain particle size to obtain slurry β.

A monolith carrier, i.e., a honeycomb flow-through type cordierite carrier {300 cells/inch$^2$ (465 k/m$^2$), 5 mil (0.125 mm) thickness, 266.7 mm diameter x 152.4 mm length, 8.514 L} was immersed in the slurry β and coated by the washcoat method so that the coating amount per unit volume was 134 g/L. The monolith carrier was then dried at 150°C for 1 hour and calcined in an air atmosphere at 500°C for 1 hour to obtain an under layer of a selective reduction catalyst (1).

- Upper layer -

Ceria-zirconia-containing composite oxide powder H (ZrO$_2$: 65% byweight, CeO$_2$: 24% by weight, SiO$_2$: 1% by weight, WO$_3$: 10% by weight) (1.3 kg), 2.3 kg of Fe-MFI type zeolite powder G and 2.8 kg of titania-containing composite oxide powder A were prepared and 0.7 kg (in terms of oxide) of amorphous silica gel was added to a ball mill followed by addition of pure water and milling to a certain particle size to obtain slurry γ.

The article onto which the lower layer had been applied was immersed in the slurry γ and coated by the washcoat method so that the coating amount of the catalyst per unit volume was 71 g/L. The article was then dried at 150°C for 1 hour and calcined in an air atmosphere at 500°C for 1 hour to obtain a selective reduction catalyst (1) {catalyst amount: 205 g/L, Fe-zeolite: 128 g, urea hydrolysis material (titania-containing composite oxide): 48 g}.

Two thus-obtained selective reduction catalysts (1) were calcined in an electric furnace at 650°C for 100 hours in an air atmosphere and were placed in series in a converter which was then connected to an exhaust outlet of a diesel engine (size : 5 L). While spraying a urea-water solution so as to obtain the NH$_3$/NOx ratio (molar ratio) of 1.0, the profile over time of the exhaust gas temperature at the outlet of the catalyst was monitored and the results are shown in FIG. 14.

[Comparative Example 2]

<Production of selective reduction catalyst (2)>

A selective reduction catalyst (2) of Comparative Example 2 {catalyst amount: 205 g/L, Fe-zeolite: 128 g and urea hydrolysis material (titania-containing composite oxide) : 48 g} was obtained in a similar method as Example 4 except that the titania-containing composite oxide powder A was replaced with the titania-containing composite oxide powder D.

Two thus-obtained selective reduction catalysts (2) were calcined in an electric furnace at 650°C for 100 hours in an air atmosphere and were placed in series in a converter which was then connected to an exhaust outlet of a diesel engine (size: 5 L). While spraying a urea-water solution so as to obtain the NH$_3$/NOx ratio (molar ratio) of 1.0, the profile over time of the exhaust gas temperature at the outlet of the catalyst was monitored and the results are shown in FIG. 14.

Evaluation 2

As apparent from FIG. 14 which summarizes the above results, the selective reduction catalyst of Example 4 produced with the titania-containing composite oxide A having preferable urea hydrolysis performance had higher denitration performance than the selective reduction catalyst of Comparative Example 2 produced with the titania-containing composite oxide D having inferior urea hydrolysis performance, and exhibited the ability from such an extremely low temperature as 140°C.

In addition, the amount of the urea hydrolysis material used in the present invention can be reduced and even at an amount of the titania-containing composite oxide A added of about 23% by weight, the catalyst sufficiently functions to hydrolyse the urea-water solution to generate NH$_3$ required for removal of nitrogen oxide (NOx).

From the above results, according to the present invention, it is apparent that, upon generation of NH$_3$ by hydrolysis of a urea-water solution sprayed at a decreased temperature and reduction and removal of NOx using NH$_3$ at a decreased temperature with the urea hydrolysis catalyst or the selective reduction catalyst containing the urea hydrolysis material, the denitration performance of the catalyst can be easily predicted only by determining the urea hydrolysis performance (Ea) of the urea hydrolysis material. In addition, it is found that physical properties of a material {BET specific surface area, NH$_3$ adsorbed amount (amount of acid point), pore volume and average pore diameter} which had been regarded as important factors for determining the level of activity are not effective in urea hydrolysis reaction.

The urea hydrolysis catalyst and the selective reduction catalyst containing the urea hydrolysis material of the present invention can be used, for example, not only for diesel automobiles but also for vehicles such as ships and for stationaries such as generators, and is particularly useful for diesel automobiles.

**Claims**

1. A urea hydrolysis catalyst comprising a monolithic carrier coated with a urea hydrolysis material as one or more catalytic layers, wherein
the urea hydrolysis material includes a titania-containing inorganic oxide having an activation energy of urea hydrolysis reaction of 120 kJ/mol or less.

2. The urea hydrolysis catalyst according claim 1, wherein the titania-containing inorganic oxide is a composite oxide containing at least one selected from silica, alumina, zirconia, neodymium oxide, praseodymium oxide and barium oxide.

3. The urea hydrolysis catalyst according to claim 1 or 2, wherein a total amount of silica, alumina, zirconia, neodymium oxide, praseodymium oxide and barium oxide accounts for 30% by weight or less of the titania-containing inorganic oxide.

4. The urea hydrolysis catalyst according to any one of claims 1 to 3, wherein the urea hydrolysis material is mixed with an anti-detachment material and then applied on the monolith carrier.

5. The urea hydrolysis catalyst according to claim 4, wherein the anti-detachment material includes one or more selected from a titania-containing inorganic oxide, titania sol or silica sol having an activation energy of urea hydrolysis reaction of more than 120 kJ/mol.

6. The urea hydrolysis catalyst according to any one of claims 1 to 5, wherein the hydrolysis material accounts for 30% by weight or more of the catalytic layer.

7. The urea hydrolysis catalyst according to any one of claims 1 to 6, wherein a coating amount of the catalytic layer is 50 to 200 g/L.

8. A selective reduction catalyst containing a urea hydrolysis material, the selective reduction catalyst comprising a monolithic carrier coated with a urea hydrolysis material and a selective reduction catalyst material as one or more catalytic layers, wherein
the urea hydrolysis material includes a titania-containing inorganic oxide having an activation energy of urea hydrolysis reaction of 120 kJ/mol or less.

9. The selective reduction catalyst according to claim 8, wherein the titania-containing inorganic oxide contains at least one selected from silica, alumina, zirconia, neodymium oxide, praseodymium oxide and barium oxide.

10. The selective reduction catalyst according to claim 8 or 9, wherein a total amount of silica, alumina, zirconia, neodymium oxide, praseodymium oxide and barium oxide accounts for 30% by weight or less of the titania-containing inorganic oxide.

11. The selective reduction catalyst according to claim 8, wherein the hydrolysis material accounts for 10 to 40% by weight of the catalytic layer.

12. The selective reduction catalyst according to claim 8, wherein the selective reduction catalyst material contains zeolite or a crystal metal aluminophosphate.

13. The selective reduction catalyst according to any one of claims 8 to 12, wherein a coating amount of the catalytic layer is 100 to 300 g/L.

**14.** An exhaust gas cleaning apparatus comprising the urea hydrolysis catalyst according to any one of claims 1 to 7, the exhaust gas cleaning apparatus further comprising a urea-water solution spraying device upstream of the urea hydrolysis catalyst.

**15.** An exhaust gas cleaning apparatus comprising the selective reduction catalyst containing a urea hydrolysis material according to any one of claims 8 to 13, the exhaust gas cleaning apparatus further comprising a urea-water solution spraying device upstream of the selective reduction catalyst.

Fig. 1

Fig. 2

Fig. 3

TITANIA-CONTAINING COMPOSITE OXIDE

Fig. 4

TITANIA-CONTAINING COMPOSITE OXIDE

Fig. 5

Fig. 6

Fig. 7

Fig. 8

EP 2 990 115 A1

Fig. 9

Fig. 10

21

Fig. 11

Fig. 12

Fig. 13

Fig. 14

Fig. 15

(EXHAUST GAS CLEANING APPARATUS I)

Fig. 16

(EXHAUST GAS CLEANING APPARATUS II)

Europäisches
Patentamt
European
Patent Office
Office européen
des brevets

# EUROPEAN SEARCH REPORT

Application Number

EP 15 00 2433

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Andreas Manuel Bernhard: "Catalytic urea decomposition, side-reactions and urea evaporation in the selective catalytic reduction of NOx", Dissertation ETH ZURICH, 1 January 2012 (2012-01-01), pages 1-193, XP055238388, CH Retrieved from the Internet: URL:https://www.psi.ch/ceg/PublicationsEN/Dissertation_Andreas_Bernhard.pdf [retrieved on 2015-12-30] * pages 27-29 * * pages 38-40; figures 2-2, 2-3 * * pages 69-70; figures 2-20; tables 2-5 * * page 150 - page 167; figures 6-1, 6-3; tables 6-1, 6-2 * * page 167 - page 176; figures 6-9, 6-10 * * page 180 - page 181 * ----- | 1-15 | INV. B01J35/00 B01J35/04 B01J21/06 F01N3/20 B01J37/02 B01D53/94 |
| X | US 2014/147356 A1 (GERHART CHRISTIAN [DE] ET AL) 29 May 2014 (2014-05-29) * paragraphs [0041], [0105] - [0116]; figures 1,2; example practical 1 * ----- | 1-3,6,7, 14 | TECHNICAL FIELDS SEARCHED (IPC) B01J F01N B01D |

The present search report has been drawn up for all claims

| Place of search | Date of completion of the search | Examiner |
|---|---|---|
| Munich | 7 January 2016 | Goebel, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 00 2433

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2016

| Patent document cited in search report | | Publication date | Patent family member(s) | | Publication date |
|---|---|---|---|---|---|
| US 2014147356 | A1 | 29-05-2014 | CA | 2840271 A1 | 10-01-2013 |
| | | | CA | 2840341 A1 | 10-01-2013 |
| | | | CA | 2840760 A1 | 10-01-2013 |
| | | | CN | 103748039 A | 23-04-2014 |
| | | | CN | 103764565 A | 30-04-2014 |
| | | | CN | 103796954 A | 14-05-2014 |
| | | | DE | 202012012914 U1 | 14-04-2014 |
| | | | DE | 202012012933 U1 | 09-04-2014 |
| | | | EP | 2726412 A2 | 07-05-2014 |
| | | | EP | 2726413 A2 | 07-05-2014 |
| | | | EP | 2726414 A2 | 07-05-2014 |
| | | | RU | 2014103449 A | 10-08-2015 |
| | | | RU | 2014103451 A | 10-08-2015 |
| | | | RU | 2014103456 A | 10-08-2015 |
| | | | US | 2014127100 A1 | 08-05-2014 |
| | | | US | 2014147356 A1 | 29-05-2014 |
| | | | US | 2014150410 A1 | 05-06-2014 |
| | | | WO | 2013004629 A2 | 10-01-2013 |
| | | | WO | 2013004630 A2 | 10-01-2013 |
| | | | WO | 2013004634 A2 | 10-01-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08103636 B
- JP H0538420 B
- JP 2002502927 W
- JP 2004108185 A
- JP 2004202450 A
- JP 2005288397 A
- JP 2006122792 A